# EUROPÄISCHE PATENTSCHRIFT

(11) **EP 1 623 773 B1**
(45) Veröffentlichungstag und Bekanntmachung des Hinweises auf die Patenterteilung: **15.08.2007**
(21) Anmeldenummer: 05014587.9
(22) Anmeldetag: 06.07.2005
(51) Int. Cl.: B21D 43/10, B25J 9/06

(54) **Knickroboter**
Articulated robot
Robot articulé

(30) Priorität: 05.08.2004 DE 102004038036
(43) Veröffentlichungstag der Anmeldung: 08.02.2006
(73) Patentinhaber: Schuler Automation GmbH & Co. KG, 91093 Hessdorf (DE)
(72) Erfinder: Dörner, Reiner, 75031 Eppingen (DE); Pottiez, Joachim, 75056 Sulzfeld (DE)
(74) Vertreter: Vogler, Bernd

(56) Entgegenhaltungen:
- EP-A- 0 636 435
- EP-A- 0 658 403
- EP-A- 0 771 621
- DE-A1- 19 615 251
- GB-A- 2 312 414
- JP-A- 6 328 140
- US-A- 4 661 040
- PATENT ABSTRACTS OF JAPAN Bd. 012, Nr. 471 (M-773), 9. Dezember 1988 (1988-12-09) -& JP 63 194832 A (MITSUBISHI MOTORS CORP), 12. August 1988 (1988-08-12)

## Beschreibung

Die Erfindung betrifft einen Mehrachs-Knickroboter zum Umsetzen von Werkstücken, insbesondere zum Umsetzen von Metallblechteilen in oder aus einer Presse oder aus einer Presse in eine benachbart stehende Presse, gemäß dem Oberbegriff des Anspruchs 1 (siehe z.B. JP-A-06328140).

Roboter dieser Art können zum Umsetzen von Blechteilen verwendet werden, die in Pressen bearbeitet werden. Dabei kann es sich beispielsweise um Karosserieteile von Kraftfahrzeugen handeln.

Bei einem bekannten Roboter wird das Tragteil von einem sich quer zur sechsten Achse vom Schwenkglied weg erstreckenden Tragarm gebildet, an dessen entgegengesetztem Ende die Halteeinrichtung der Vakuumsaugeinrichtung angeordnet ist. Dabei verläuft die siebte Achse, um die die Halteeinrichtung drehbar ist, parallel zur sechsten Achse.

Beim Betrieb des Roboters sind die sechste und siebte Achse rechtwinkelig zum jeweiligen Blechteil gerichtet und der das Tragteil bildende Tragarm erstreckt sich parallel zum Blechteil über dieses, so dass die Vakuumsaugeinrichtung im mittleren Bereich des Blechteils angreift.

Dieser Roboter wird vor einer der seitlichen Säulen des Pressengestells der betreffenden Presse bzw. zwischen zwei jeweils zu einer von zwei einander benachbarten Pressen gehörenden Säulen angeordnet. Die verschiedenen Achsen werden so gesteuert und angetrieben, dass die Vakuumsaugeinrichtung und mit dieser das jeweilige Blechteil unverschwenkt und parallel versetzt umgesetzt wird.

Der Tragarm steht verhältnismäßig weit vom Schwenkglied ab, so dass er von außerhalb des Blechteilrandes bis zum mittleren Bereich des Blechteils reicht. Daher ergibt sich durch das an der Vakuumsaugeinrichtung hängende Blechteil ein zur Länge des Tragarms proportionales und daher verhältnismäßig großes Kippmoment, das an der sechsten Achse aufgefangen werden muss.

Ausgehend hiervon liegt der vorliegenden Erfindung die Aufgabe zugrunde, einen Roboter der eingangs genannten Art zu schaffen, der kräftemäßig günstig ausgelegt ist und platzsparend eingesetzt werden kann.

Diese Aufgabe wird bei einem gattungsgemäßen Roboter erfindungsgemäß durch die Merkmalskombination des Anspruchs 1 gelöst.

Bei von der Vakuumsaugeinrichtung gehaltenem Blechteil befindet sich auf diese Weise der Schwerpunkt in Verlängerung der sechsten Drehachse unterhalb des Schwenkgliedes, so dass das genannte Kippmoment wesentlich verkleinert wird.

Der Roboter muss ferner nicht zwischen den Säulen zweier Pressengestelle angeordnet werden. Man kann ihn auch hängend anordnen. Auf diese Weise ergibt sich ein freier Zugang zwischen die Pressen. Des Weiteren kann ein sehr kleiner Pressenabstand realisiert werden.

Der für ein paralleles Versetzen der Blechteile erforderliche Bewegungsablauf ist verhältnismäßig einfach. Dies begünstigt die Arbeitsgeschwindigkeit. Ferner ermöglicht es die erfindungsgemäß angeordnete siebte Achse, dass die Blechteile bei ihrem Umsetzen nicht gedreht werden müssen. Schließlich ergibt sich, insbesondere bei großen Blechteilen, ein gutes Handling.

Zweckmäßigerweise ist an das Schwenkglied ein um die sechste Achse verdrehbares Rotationsglied angesetzt, an dem das Tragteil lösbar befestigt ist. Bei einem solchen Roboter kann das Tragteil mit der Vakuumsaugeinrichtung ohne weiteres ausgewechselt oder weggenommen werden, falls der Roboter für andere Zwecke eingesetzt werden soll.

Weitere zweckmäßige Ausgestaltungen sind in den Unteransprüchen angegeben.

Nachstehend wird ein Ausführungsbeispiel der Erfindung anhand der Zeichnung erläutert. Es zeigen:

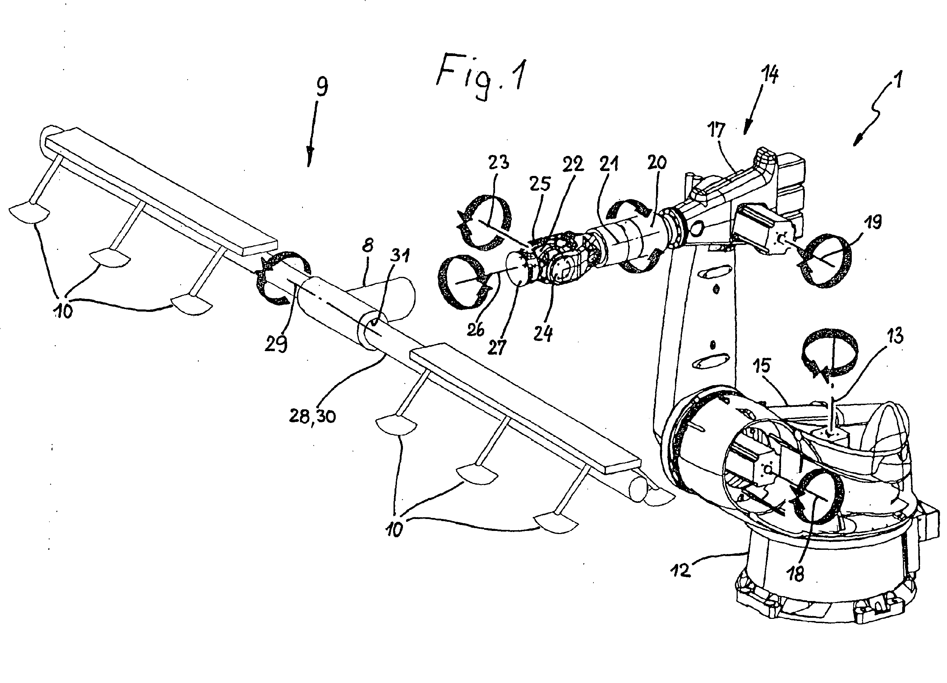

- Figur 1: einen bevorzugte Ausführung des erfindungsgemäßen Roboters in Schrägansicht, wobei das Tragteil mit der Vakuumsaugeinrichtung im entfernten Zustand schematisch dargestellt ist,

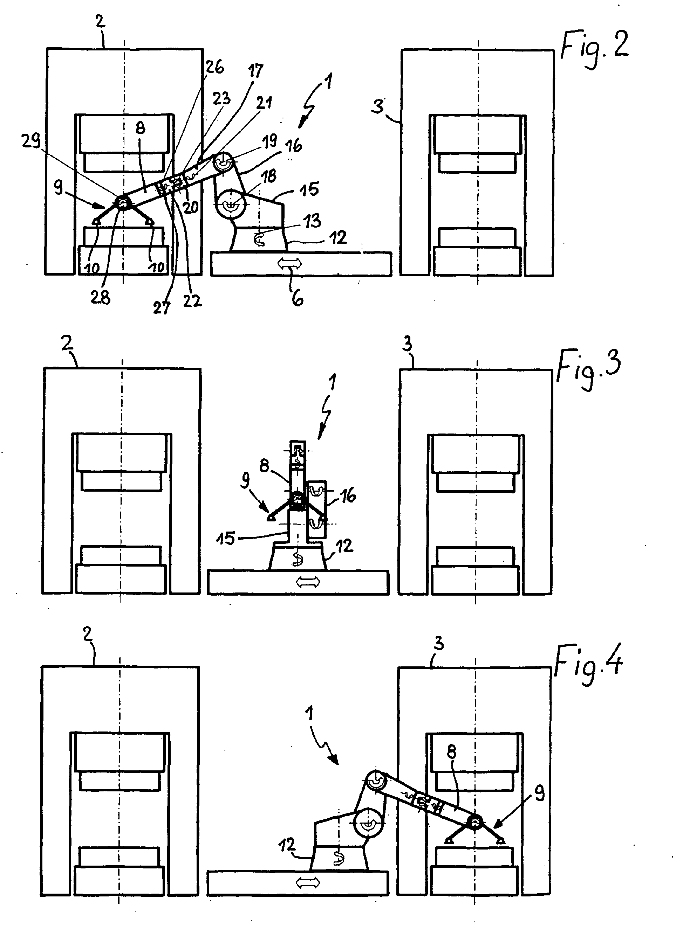

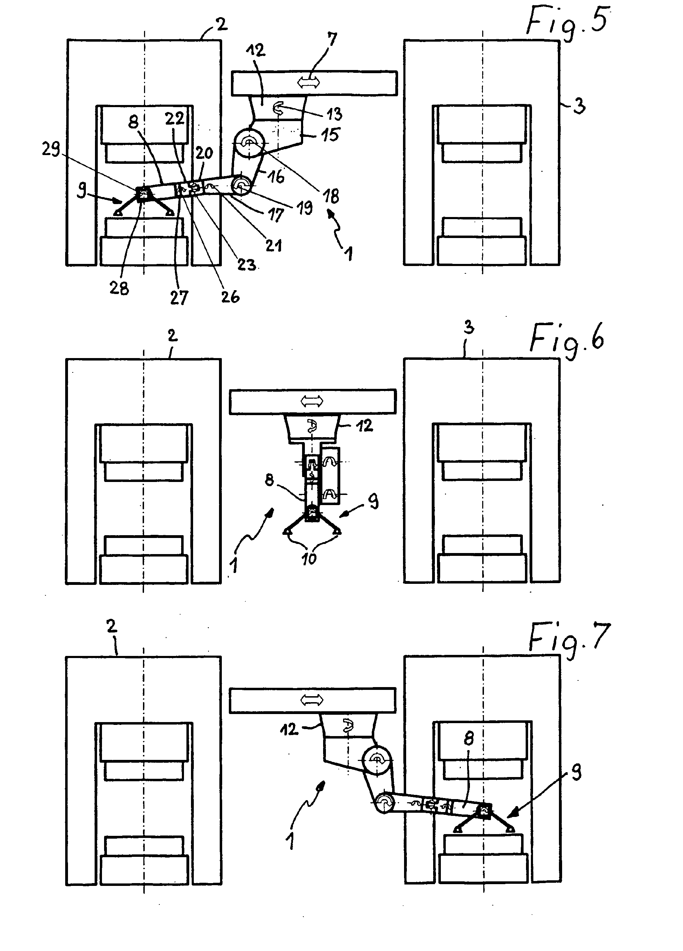

- Figuren 2, 3 und 4: den Knickroboter nach Figur 1 im zwischen zwei Pressen stehend und dabei verfahrbar angeordneten Zustand in schematischer Darstellungsweise, wobei der Roboter in Figur 2 in die eine Presse zum Aufnehmen des betreffenden Blechteils greift, in Figur 3 eine Zwischenstellung einnimmt und in Figur 4 in die andere Presse zum Absetzen des Blechteils greift,
- Figuren 5, 6 und 7: den gleichen Roboter wiederum zwischen zwei Pressen in den gleichen Stellungen wie in den Figuren 2, 3 und 4, wobei der Roboter jedoch hängend und dabei verfahrbar angeordnet ist,

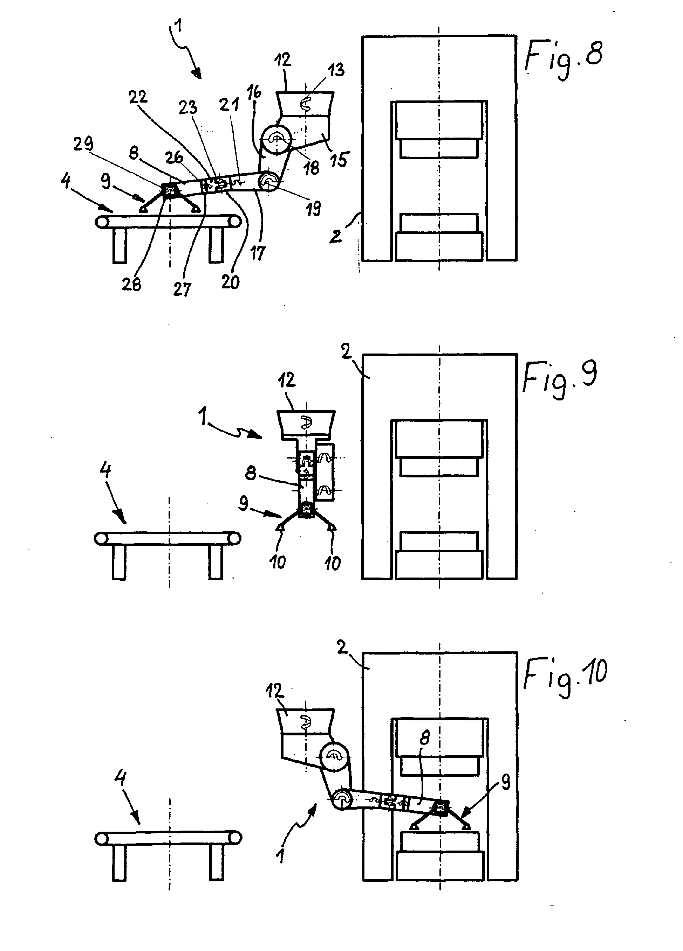

- Figuren 8, 9 und 10: den gleichen Roboter in hängend angeordnetem Zustand, der hier ein Blechteil von einer vor einer Presse angeordneten Fördereinrichtung in die Presse umsetzt, wobei der Roboter in Figur 8 auf die Fördereinrichtung zur Aufnahme des betreffenden Blechteils greift, in Figur 9 eine Zwischenstellung einnimmt und in Figur 10 in die Presse zum Absetzen des Blechteils greift, und

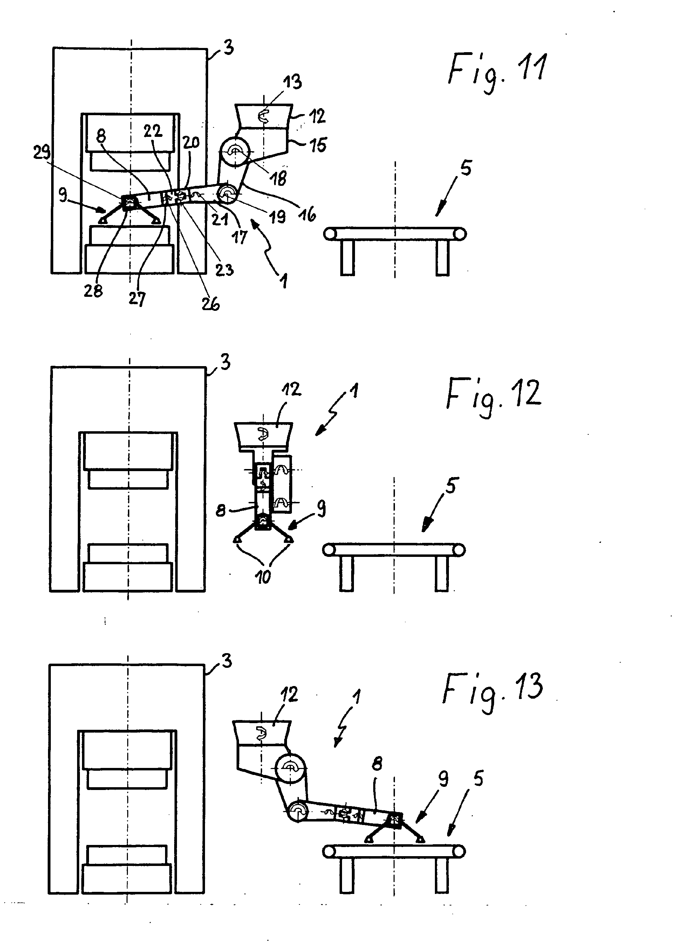

- Figuren 11, 12 und 13: den gleichen Roboter in hängend angeordnetem Zustand, der hier ein Blechteil aus einer Presse auf eine dieser nachgeordnete Fördereinrichtung umsetzt, wobei der Roboter in Figur 11 in die Presse zur Aufnahme des Blechteils greift, in Figur 12 eine Zwischenstellung einnimmt und in Figur 13 auf die Fördereinrichtung zum Absetzen des Blechteils greift.

Bei dem aus der Zeichnung hervorgehenden Roboter 1 handelt es sich um einen Mehrachs-Knickroboter, der zum vereinzelten Umsetzen von nicht dargestellten Metallblechteilen, beispielsweise Karosserieteile von Kraftfahrzeugen, verwendet wird. Im Falle der Figuren 2 bis 4 und 5 bis 7 werden die Metallblechteile nacheinander aus der einen Presse 2, in der sie bearbeitet worden sind, in die Presse 3 zur Weiterbearbeitung umgesetzt. Der Unterschied zwischen den Figuren 2 bis 4 einerseits und den Figuren 5 bis 7 andererseits besteht darin, dass der Roboter stehend bzw. hängend angeordnet ist.

Im Falle der Figuren 8 bis 10 ist der Roboter 1 zwischen einer die Blechteile anfördernden Fördereinrichtung 4 und der Presse 2 angeordnet, so dass er sie von der Fördereinrichtung 4 in die eingangsseitige Presse 2 umsetzt. In den Figuren 11 bis 13 befindet sich der Roboter 1 zwischen der ausgangsseitigen Presse 3 und einer nachgeordneten Fördereinrichtung 5, so dass er die in der Presse 3 bearbeiteten Blechteile aus der Presse 3 entnimmt und auf der Fördereinrichtung 5 absetzt.

Der Roboter 1 kann in jedem Falle wie beim Anwendungsbeispiel nach den Figuren 2 bis 4 stehend, und zwar entweder auf dem Boden oder einer bodenseitigen Unterkonstruktion oder auf einem nicht dargestellten erhöhten Podest und dabei jeweils entweder ortsfest oder in Richtung gemäß Pfeil 6 zur jeweiligen Presse hin und von dieser weg verfahrbar, oder wie bei den Anwendungsbeispielen nach den Figuren 5 bis 13 hängend, und zwar entweder ortsfest (Figuren 8 bis 13) oder in Richtung gemäß Pfeil 7 zur jeweiligen Presse hin und von dieser weg verfahrbar, angeordnet werden.

Der Roboter 1 trägt ein Tragteil 8, an dem eine Hebeeinrichtung 9 angeordnet ist. Beim Ausführungsbeispiel wird die Hebeeinrichtung 9 von einer Vakuumsaugeinrichtung mit einer Anzahl von Vakuumsaugern 10 gebildet, die in üblicher Weise mittels einer Vakuumpumpe und einer Steuereinrichtung entlüftbar oder belüftbar sind. Setzt man die Vakuumsaugeinrichtung mit den Vakuumsaugern 10 auf ein Metallblechteil auf und entlüftet man die Vakuumsauger, bleibt das Metallblechteil durch den in den Vakuumsaugern 10 entstehenden Unterdruck an diesen haften, so dass es durch den Roboter umgesetzt werden kann. Zum Absetzen des Blechteils werden die Vakuumsauger 10 belüftet. Derartige Vakuumsaugeinrichtungen sind allgemein bekannt, so dass sich eine ins Einzelne gehende Beschreibung erübrigt.

Die Hebeeinrichtung 9 muss nicht von einer Vakuumsaugeinrichtung sondern kann auch von einer anderen, beispielsweise magnetischen Hebeeinrichtung gebildet werden.

Die einzelnen Achsen des Roboters 1, die nachstehend noch beschrieben werden, sind jeweils für sich antreibbar. Die zugehörigen Motoren sind aus Figur 1 ersichtlich. Diese den einzelnen Achsen zugeordneten Antriebseinrichtungen werden bei derartigen Robotern allgemein verwendet, so dass sich auch hier eine weitergehende Beschreibung erübrigt.

Die Antriebseinrichtungen der Roboterachsen sind, wie bei Robotern üblich, mittels einer Steuereinrichtung so steuerbar, dass der Roboter die gewünschte Bewegung ausführt. Im vorliegenden Falle ermöglichen die verschiedenen Roboterachsen zusammen mit einer entsprechenden Steuerung einen derartigen Bewegungsablauf, dass die Hebeeinrichtung 9 und somit das von dieser gehaltene Blechteil zwischen den beiden Roboter-Endstellungen eine ihre Ausrichtung beibehaltende und in Draufsicht von oben gemäß Pfeil 11 lineare Bewegung ausführt. In den beiden Endstellungen, wenn das Blechteil hochgehoben bzw. abgesetzt wird, führt die Hebeeinrichtung 9 eine Auf- /Abbewegung aus, so dass sich insgesamt in der Zeichenebene der Figuren 2 bis 13 entsprechender Seitenansicht ein im Wesentlichen entlang einem Rechteck verlaufender Bewegungsablauf ergibt.

Bei dem Roboter 1 handelt es sich mit Ausnahme des bereits erwähnten Tragteils 8 und der diesem zugeordneten Achse - dies ist die noch zu beschreibende siebte Achse - um einen handelsüblichen Roboter. Er weist eine Roboterbasis 12 auf, mit der der Roboter am jeweiligen Einsatzort festgelegt wird. Ist der Roboter, wie in den Fällen der Figuren 2 bis 7, verfahrbar, ist die Roboterbasis 12 schlittenartig ausgebildet oder sitzt an einem entsprechenden Schlitten, der in Richtung gemäß des Pfeiles 6 oder 7 bewegbar geführt ist.

An der Roboterbasis 12 ist eine um eine in Gebrauchslage vertikale erste Achse 13 schwenkbare Bewegungseinheit 14 schwenkbar gelagert, die zunächst ein basisseitiges Schwenkteil 15 enthält, das um die vertikale erste Achse 13 verschwenkbar an der Roboterbasis 12 sitzt. Die Bewegungseinheit 14 enthält ferner einen von einem Oberarm 16 und einem Unterarm 17 gebildeten Knickarm. Der Oberarm 16 des Knickarms ist einenends um eine in Gebrauchslage horizontale zweite Achse verschwenkbar mit dem Schwenkteil 15 und andernends um eine horizontale dritte Achse 19 verschwenkbar mit dem zugewandten Ende des Unterarms 17 verbunden.

Zur Bewegungseinheit 18 gehört ferner ein am dem Oberarm 16 entgegengesetzten Ende des Unterarms 17 angeordnetes Drehglied 20, das um eine in Längsrichtung des Unterarms 17 verlaufende vierte Achse 21 verdrehbar ist. Am dem Unterarm 17 entgegengesetzten Ende des Drehgliedes 20 ist ein Schwenkglied 22 angeordnet, das um eine quer zur vierten Achse 21 verlaufende fünfte Achse 23 verschwenkbar mit dem Drehglied 20 verbunden ist. Das Drehglied 20 weist zwei mit Querabstand zueinander angeordnete Lagerschenkel 24, 25 auf, die das Schwenkglied 22 seitlich übergreifen. Die fünfte Achse 23 sitzt an den beiden Lagerschenkeln 24, 25.

An das Schwenkglied 22 ist ein um eine quer zur fünften Achse 23 verlaufende sechste Achse 26 verdrehbares Rotationsglied 27 angesetzt, an dem das Tragteil 8 befestigt ist, so dass das Tragteil 8 die Drehbewegung des Rotationsglieds 27 mitmacht. Zweckmäßigerweise wird das Tragteil 8 lösbar am Rotationsglied 27 befestigt, so dass es je nach den Erfordernissen gegen ein anderes Tragteil ausgewechselt werden kann.

Wie bereits erwähnt, handelt es sich bei dem Roboter 1 bis einschließlich des Rotationsglieds 27 um einen handelsüblichen Roboter.

Das Tragteil 8 trägt, wie bereits erwähnt, die Hebeeinrichtung 9 mit den Vakuumsaugern 10. Dabei ist die Anordnung so getroffen, dass sich das Tragteil 8 in Richtung der sechsten Achse vom Schwenkglied 22 bzw. vom an diesem sitzenden Rotationsglied 27 weg erstreckt und dass die Hebeeinrichtung 9 eine die Vakuumsauger 10 haltende Halteeinrichtung 28 enthält, die um eine quer zur sechsten Achse 26 gerichtete siebte Achse 29 verdrehbar mit dem Tragteil 8 verbunden ist.

Die Halteeinrichtung 28 wird beim Ausführungsbeispiel von einem um die siebte Achse 29 verdrehbar am Tragteil 8 gelagerten Querstab 30 gebildet, dem entlang die Vakuumsauger 10 angeordnet sind. Der Querstab 30 ist mit seiner Längsrichtung gleich gerichtet wie die siebte Achse 29.

Wie insbesondere aus Figur 1 ersichtlich ist, weist das Tragteil 8 eine in Querrichtung, d.h. in Richtung der siebten Achse 29, verlaufende Lagerausnehmung 31 auf, die von dem Querstab 30 durchgriffen wird. Der Drehantrieb zum Verdrehen des Querstabes 30 um die siebte Achse 29 befindet sich im Tragteil 8. Der Querstab 30 ist mit seinem mittleren Bereich am Tragteil 8 gelagert, so dass er von dem Tragteil 8 mittig gehalten wird.

Aufgrund der Verdrehbarkeit der Halteeinrichtung 28 um die siebte Achse 29 kann das jeweilige Blechteil stets mit horizontaler Ausrichtung gehalten werden.

Die für das weiter oben beschriebene Umsetzen des jeweiligen Blechteils erforderliche Steuerung der den insgesamt sieben Achsen zugeordneten Antriebe kann von einem Fachmann ohne weiteres ausgeführt werden.

## Patentansprüche

1. Mehrachs-Knickroboter zum Umsetzen von Werkstücken, insbesondere zum Umsetzen von Metallblechteilen in oder aus einer Presse oder aus einer Presse in eine benachbart stehende Presse, mit einer Roboterbasis (12), an der eine um eine in Gebrauchslage vertikale erste Achse (13) schwenkbare Bewegungseinheit (14) schwenkbar gelagert ist, die ein basisseitiges Schwenkteil (15), einen von einem Oberarm (16) und einem Unterarm (17) gebildeten Knickarm, dessen Oberarm (16) einenends um eine horizontale zweite Achse (18) verschwenkbar mit dem Schwenkteil (15) und andernends um eine horizontale dritte Achse (19) verschwenkbar mit dem zugewandten Ende des Unterarms (17) verbunden ist, ein am dem Oberarm (16) entgegengesetzten Ende des Unterarms (17) angeordnetes, um eine in Längsrichtung des Unterarms (17) verlaufende vierte Achse (21) verdrehbares Drehglied (20), ein um eine quer zur vierten Achse (21) verlaufende fünfte Achse (23) verschwenkbar mit dem Drehglied (20) verbundenes Schwenkglied (22) und ein um eine quer zur fünften Achse (23) verlaufende sechste Achse (26) verdrehbar mit dem Schwenkglied (22) verbundenes Tragteil (8) aufweist, an dem die Halteeinrichtung (28) einer den umzusetzenden Blechteilen zugeordneten Hebeeinrichtung (9), insbesondere eine Vakuumsaugeinrichtung, um eine siebte Achse (29) verdrehbar angeordnet ist, wobei sich das Tragteil (8) in Richtung der sechsten Achse (26) vom Schwenkglied (22) weg erstreckt und wobei die siebte Achse (29) quer zur sechsten Achse (26) gerichtet ist, **dadurch gekennzeichnet**, **gekennzeichnet, dass** die Halteeinrichtung (28) der Hebeeinrichtung (9) von einem um die siebte Achse (29) verdrehbar am Tragteil (8) gelagerten Querstab (30) gebildet wird, dessen Längsrichtung gleich gerichtet wie die siebte Achse (29) ist.

2. Roboter nach Anspruch 1, **dadurch gekennzeichnet, dass** der Querstab (30) eine in Querrichtung verlaufende Lagerausnehmung (31) am Tragteil (8) durchgreift .

3. Roboter nach Anspruch 1 oder 2, **dadurch gekennzeichnet, dass** der Querstab (30) mit seinem mittleren Bereich am Tragteil (8) gelagert ist.

4. Roboter nach einem der Ansprüche 1 bis 3, **dadurch gekennzeichnet, dass** an das Schwenkglied (22) ein um die sechste Achse (26) verdrehbares Rotationsglied (27) angesetzt ist, an dem das Tragteil (8) lösbar befestigt ist.

## Claims

1. Multi-axial articulated robot for the transfer of workpieces, in particular for the transfer of sheet metal components into or out of a press or from one press to an adjacent press, with a robot base (12), on which a handling unit (14) pivotable about a first axis (13), which is vertical in the position of use, is pivoted, said handling unit comprising a base-side swivel part (15), an articulated arm represented by an upper arm (16) and a forearm (17), one end of the upper arm (16) being joined to the swivel part (15) to pivot about a horizontal second axis (18) and the other end being joined to the adjacent end of the forearm (17 to pivot about a horizontal third axis (19), a rotary member (20) located at the opposite end of the forearm (17) and rotatable about a fourth axis (21) extending in the longitudinal direction of the forearm (17), a swivel member (22) joined to the rotary member (20) to pivot about a fifth axis (23) extending at right angles to the fourth axis (21), and a support part (8) joined to the swivel member (22) and rotatable about a sixth axis (26) extending at right angles to the fifth axis (23), whereon the retaining device (28) of a lifting device (9) assigned to the sheet metal components to be transferred, in particular of a vacuum suction device, is mounted and rotatable about a seventh axis (29), wherein the support part (8) extends away from the swivel part (22) in the direction of the sixth axis (26), and wherein the seventh axis (29) is oriented at right angles to the sixth axis (26), **characterised in that** the retaining device (28) of the lifting device (9) is represented by a transverse bar (30) mounted on the support part (8) and rotatable about the seventh axis (29), its longitudinal direction corresponding to the seventh axis (29).

2. Robot according to claim 1, **characterised in that** the transverse bar (30) passes through a bearing recess (31) on the support part (8), which extends in the transverse direction.

3. Robot according to claim 1 or 2, **characterised in that** the transverse bar (30) is mounted on the support part (8) in its central region.

4. Robot according to any of claims 1 to 3, **characterised in that** a rotational member (27), to which the support part (8) is releasably secured, is fitted to the swivel member (22) and rotatable about the sixth axis (26).

## Revendications

1. Robot articulé multiaxe destiné à transférer des pièces, en particulier destiné à transférer des pièces en tôle métallique dans ou hors d'une presse ou à partir d'une presse dans une presse montée à proximité, comportant une base (12), sur laquelle est montée pivotante une unité mobile (14) qui est apte à pivoter autour d'un premier axe (13) vertical en position de service et qui comporte un élément pivotant (15) du côté de la base, un bras articulé, qui est formé par un bras (16) et un avant-bras (17) et dont le bras (16) est relié au niveau d'une extrémité à l'élément pivotant (15), de manière à pouvoir pivoter autour d'un deuxième axe (18) horizontal, et est relié au niveau de l'autre extrémité à l'extrémité de l'avant-bras (17) orientée vers lui, de manière à pouvoir pivoter autour d'un troisième axe (19) horizontal, un organe rotatif (20), monté sur l'extrémité de l'avant-bras (17), opposée au bras (16) et apte à tourner autour d'un quatrième axe (21) orienté dans le sens longitudinal de l'avant-bras (17), un organe pivotant (22) relié à l'organe rotatif (20) de manière à pouvoir pivoter autour d'un cinquième axe (23) orienté perpendiculairement au quatrième axe (21), et un élément de support (8), qui est relié à l'organe pivotant (22) de manière à pouvoir tourner autour d'un sixième axe (26) orienté perpendiculairement au cinquième axe (23) et sur lequel est monté, de manière à pouvoir tourner autour d'un septième axe (29), un dispositif de fixation (28) d'un dispositif de levage (9) par exemple d'un dispositif d'aspiration sous vide, associé aux pièces en tôle à transférer, l'élément de support (8) étant orienté dans la direction du sixième axe (26) en étant éloigné de l'organe pivotant (22), et le septième axe (29) étant orienté perpendiculairement au sixième axe (26), **caractérisé en ce que** le dispositif de fixation (28) du dispositif de levage (9) est formé par une barre transversale (30), qui est montée contre l'élément de support (8) de manière à pouvoir tourner autour du septième axe (29) et dont le sens longitudinal est orienté dans le même sens que le septième axe (29).

2. Robot articulé selon la revendication 1, **caractérisé en ce que** la barre transversale (30) passe à travers un évidement de palier (31), orienté dans le sens transversal sur l'élément de support (8).

3. Robot articulé selon la revendication 1 ou 2, **caractérisé en ce que** la barre transversale (30) est logée avec sa partie centrale contre l'élément de support (8).

4. Robot articulé selon l'une quelconque des revendications 1 à 3, **caractérisé en ce que** contre l'organe pivotant (22) est accolé un organe de rotation (27), qui est apte à tourner autour du sixième axe (26) et sur lequel l'élément de support (8) est fixé de manière amovible.
